# FASCICULE DE BREVET EUROPEEN

(11) **EP 0 494 012 B1**
(45) Date de publication et mention de la délivrance du brevet: **17.09.1997**
(21) Numéro de dépôt: 91403503.5
(22) Date de dépôt: 20.12.1991
(51) Int. Cl.: G01N 27/20

(54) **Procédé et appareil pour la vérification de l'état d'isolement électrique d'un ouvrage électriquement conducteur**
Verfahren und Vorrichtung für die Überprüfung des elektrischen Isolierungszustands einer elektrisch leitenden Konstruktion
Method and device for checking the electrically insulating state of an electrically conducting construction

(30) Priorité: 27.12.1990 FR 9016343
(43) Date de publication de la demande: 08.07.1992
(73) Titulaire: GAZ DE FRANCE, 75017 Paris (FR)
(72) Inventeur: Antony, Philippe, F-78570 Chanteloup (FR); Jouan, Patrick, F-69960 Corbas (FR); Lemarchand, Jean-Yves, F-60200 Compiegne (FR); Dauzat, Dominique, F-60200 Compiegne (FR)
(74) Mandataire: Lerner, François

(56) Documents cités:
- EP-A- 0 411 689
- WO-A-88/08462
- GB-A- 2 223 851
- US-A- 4 099 117
- US-A- 4 511 844
- US-A- 4 721 957
- US-A- 4 755 267

## Description

L'invention concerne un procédé et un appareil pour vérifier l'état d'isolement électrique d'un ouvrage électriquement conducteur placé dans un milieu électrolytique et relié par un réseau de conducteurs électriques d'une part à une contre-électrode placée dans le milieu électrolytique précité et, d'autre part, à une électrode de référence qui est en contact avec ce même milieu électrolytique, une tension existant naturellement entre cette électrode et ledit ouvrage.

Lors des essais menés dans le cadre de l'invention,l'ouvrage électriquement conducteur consistait en une conduite de gaz enterrée réalisée en un matériau métallique. Et l'utilité première du procédé objet de l'invention consistait à vérifier la qualité de la pose de cette canalisation laquelle était en l'espèce enrobée d'un revêtement électriquement isolant formant une protection passive destinée à soustraire la canalisation de l'environnement électrolytique du sol.

L'expérience ayant montré que les poses notamment de telles canalisations enterrées ne sont pas toujours parfaites et qu'en outre les revêtements de protection passive ne sont jamais totalement efficaces, on a donc été amené à se pencher sur le problème de la vérification de l'état d'isolement électrique de ces ouvrages, une fois ceux-ci en place dans leur milieu.

Or, une telle vérification rencontre dans la pratique un certain nombre de difficultés relatives notamment au caractère variable dans le temps des paramètres à mesurer, ces variations pouvant notamment être induites par des installations en courant continu mal isolées (traction ferroviaire, usine d'électrolyse...).

Sont également survenus des problèmes d'erreurs de mesure dues aux phénomènes de polarisation des ouvrages, ces polarisations évoluant dans le temps et en fonction de l'évolution électrique en particulier de l'ouvrage, de la contre-électrode et des perturbations pouvant, à proximité, traverser le milieu électrolytique.

Après de longues études, le déposant a réussi à mettre au point un procédé réellement fiable et efficace permettant donc de vérifier l'état d'isolement électrique d'un ouvrage conducteur, ce procédé se caractérisant notamment en ce que :
a) on capte au moins une fois et on enregistre la tension entre l'ouvrage et l'électrode de référence,
b) on établit dans le réseau conducteur entre l'ouvrage et la contre-électrode, une circulation imposée de courant électrique dont en enregistre l'intensité.
c) on capte au moins une fois et on enregistre à nouveau la tension entre l'ouvrage et l'électrode de référence, courant en circulation,
d) on calcule et on enregistre la différence ΔU entre les tensions enregistrées en a) et c) respectivement sans et avec circulation de courant imposé,
e) on interrompt ladite circulation de courant imposé et on répète un nombre donné de fois les étapes a), b), c), d), en faisant varier, lors de l'état b), l'intensité du courant imposé,
f) on en déduit ensuite l'évolution de ladite différence de tensions ΔU en fonction de l'intensité I de courant établi dans le réseau, laquelle évolution est linéaire de la forme ΔU = A.I (A = constante) depuis I = 0 jusqu'à une valeur d'intensité déterminée de ce courant,
g) on calcule la pente A,
h) et on en déduit l'état d'isolement électrique de l'ouvrage en identifiant ladite pente à la résistance électrique de cet ouvrage.

De cette façon, par une acquisition rapide des potentiels mesurés ou captés, on va pouvoir obtenir des grandeurs se rapprochant des valeurs réelles existant dans le terrain.

De plus, en limitant dans le temps, par un contrôle rigoureux, les durées d'établissement des courants imposés, on pourra mener des campagnes d'essais de durée raisonnable en répétant un grand nombre de fois les mesures et en traitant statistiquement ces dernières de façon à détecter et à inhiber en particulier la présence perturbatrice des courants vagabonds.

A ce sujet, une caractéristique complémentaire de l'invention prévoit d'ailleurs que les tensions entre l'ouvrage et la contre-éléctrode étant perturbées par des sources électriques génératrices de fréquences modifiant dans le temps les tensions à mesurer, on élimine par filtrage lors des étapes susmentionnées a) et/ou c) cesdites fréquences lorsque celles-ci sont au-delà d'un seuil prédéterminé et/ou correspondent à des fréquences connues identifiées comme perturbatrices.

Comme on le verra ci-après dans la description qui va suivre, et toujours pour répondre à ce problème de perturbations électriques, il a également été prévu dans l'invention d'effectuer de préférence un traitement statistique des mesures afin de ne prendre en considération que des valeurs jugées cohérentes et raisonnables, comme cela est expliqué en particulier dans les revendications 3, 4 et 7 annexées.

Outre un tel procédé de vérification, l'invention a également pour objet un appareil destiné à vérifier l'état d'isolement électrique de l'ouvrage choisi.

Il est déjà connu d'utiliser un appareil comprenant :
- des moyens de mesure de la tension entre l'électrode de référence et l'ouvrage,
- un générateur de courant, pour générer un courant électrique entre l'ouvrage et la contre-électrode, et
- des moyens de mesure de ce courant,

Un tel dispositif est notamment décrit dans le brevet US-A-4 755 267. Toutefois, dans ce brevet l'appareil est destiné à la mesure de tensions entre l'ouvrage et l'électrode de référence uniquement avec de faibles variations du courant imposé (de l'ordre de 10%). Le but de l'invention est tout autre puisqu'il s'agit de s'affranchir d'éléments extérieurs mal isolés engendrant des variations des paramètres à mesurer. Conformément à l'invention, cet appareil se caractérise notamment en ce qu'il comprend :
- une horloge pour interrompre et établir séquentiellement la circulation du courant imposé par le générateur entre l'ouvrage et la contre-électrode, et déclencher des mesures dudit courant et de ladite tension,
- des moyens d'acquisition et de traitement, des mesures effectuées pour calculer, pour chaque intensité de courant imposé, la différence ΔU entre les tensions mesurées sans et avec circulation de courant imposé, et pour calculer également le rapport A entre la différence des tensions susmentionnées (ΔU) et ladite intensité de courant imposé correspondante,
- et des moyens d'affichage du rapport A calculé.

La solution de l'invention répond bien au problème posé, en mesurant la tension sans circulation de courant entre chaque mesure avec circulation de courant. Le calcul de la différence entre ces deux valeurs permet ainsi d'obtenir des résultats fiables, reproductibles dans le temps et ne dépendant que des caractéristiques recherchées.

D'autes caractéristiques et avantages de l'invention apparaitront encore de la description qui va suivre faite en référence aux dessins annexés dans lesquels :
- la figure 1 représente un schéma général de montage d'un circuit permettant la mise en oeuvre du procédé de l'invention,
- la figure 2 est un schéma-bloc représentant plus en détail l'unité d'acquisition, de traitement et de visualisation de l'appareil de l'invention,
- la figure 3 présente une courbe illustrative d'une évolution possible, sur un ouvrage, de la différence de potentiel ΔU en fonction du courant imposé I,
- les figures 4a,4b présentent deux courbes pouvant être obtenues sur les moyens de mesure de tension utilisés par l'appareil de l'invention, ceci en l'absence de filtre permettant d'éliminer les fréquences parasites (figure 4b) et dans le cas où un tel filtre est utilisé (figure 4a).
- Et les figures 5a et 5b présentent des courbes d'évolution dans le temps de signaux de courant et de tension respectivement.

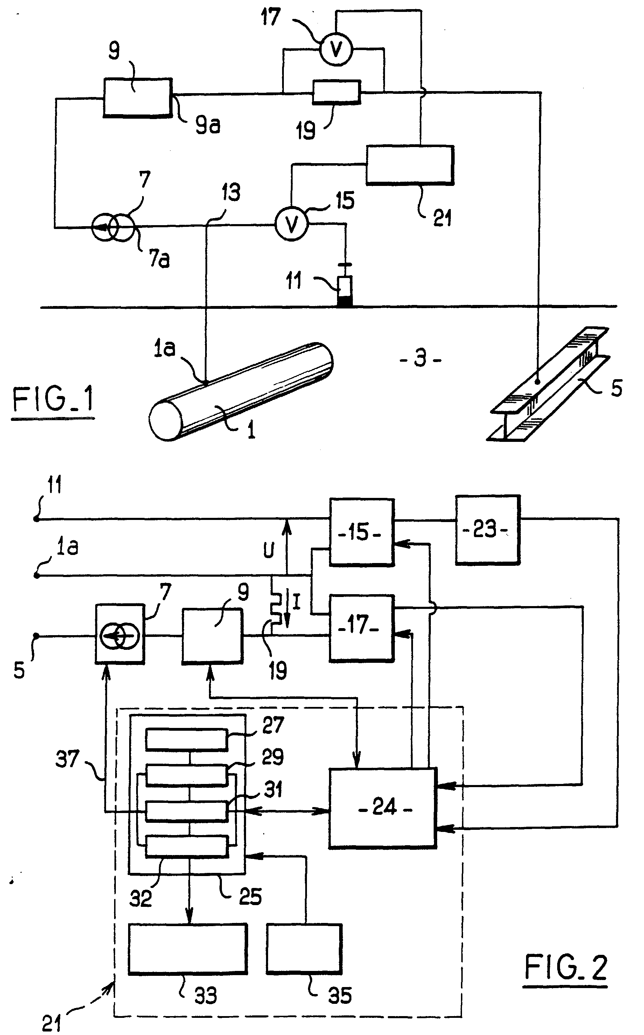

Si l'on se reporte aux dessins, on aperçoit tout d'abord sur la figure 1, une canalisation métallique 1 constituant dans cet exemple l'ouvrage électriquement conducteur dont on cherche à vérifier l'état d'isolement. Cette canalisation 1 est enterrée au sein d'un milieu électrolytique constitué ici par le sol 3. Dans ce sol, est également enterrée une contre-électrode 5 reliée à la canalisation par un réseau électrique dans lequel on va faire circuler un courant. Sous l'action d'un tel courant, la pièce 5 se comportera généralement comme une anode servant à injecter le courant dans le sol. Dans la pratique, la pièce 5 pourra se présenter sous la forme d'une traverse voire d'un piquet métallique, par exemple en acier. Ainsi pourra-t on favoriser une réaction cathodique au niveau de l'ouvrage, en reportant la réaction naturelle d'oxydation sur l'anode 5 dont on accepte a priori la dégradation (on notera toutefois que parfois pour la protection de certains métaux, tels que certains aciers inoxydables ou des alliages d'aluminium, passivables dans l'électrolyte, il peut être approprié de faire jouer à la "contre-électrode" le rôle de cathode en faisant alors circuler un courant "de protection anodique").

Pour assurer la circulation prévue du courant dans le réseau, on utilise un générateur de courant 7 monté en série sur le réseau et susceptible de délivrer vers la pièce 5 un courant a priori continu ou du moins constant.

Pour les besoins du contrôle, à ce générateur 7 on a associé en série une horloge 9 permettant d'interrompre et de rétablir séquentiellement la circulation du courant imposé par le générateur 7 et de commander le déclenchement des moyens de mesure 15 et 17 présentés ci-après. L'horloge 9 pourra consister par exemple en un générateur de signaux basses fréquences formant un interrupteur à temps d'impulsions réglables, par exemple de 1 ms à 1 s.

Dans le domaine de la protection des ouvrages métalliques placés dans un environnement électrolytique, on sait que la différence de potentiel entre l'ouvrage et l'électrolyte est représentative de l'état électrique de cet ouvrage.

Matériellement, cette différence de potentiel est habituellement mesurée entre le métal de l'ouvrage et une électrode de référence en contact avec l'électrolyte mais située à distance de la surface métallique de l'ouvrage. C'est pourquoi on a représenté en 11 une telle électrode placée sur le sol et branchée au réseau électrique précité, en 13, un conducteur reliant la borne négative 7a du générateur 7 et, en 1a, la structure métallique de la canalisation 1.

Comme connu en soi, une électrode métallique plongée dans un électrolyte est assimilable à une demi-pile. Or, on ne peut mesurer que la différence de potentiel d'une pile. Dans le cas présent, cette pile sera donc constituée par la chaine électrochimique comprenant l'ouvrage métallique à étudier et l'électrode de référence, qui, devant la pratique est habituellement du type Cu/CuSO4,Ag/AgCl ou encore au calomel (Hg/HgCl-KCL), dont on connaît les potentiels respectifs.

Pour mesurer le gradient de potentiel entre la canalisation 1 et l'électrode 11, il a bien entendu été prévu un capteur de mesure de tension schématisé en 15 sur la figure 1 et branché entre l'électrode et le point 13 du réseau. Ce premier moyen de mesure pourrait consister en un oscilloscope à mémoire avec une imprimante associée.

Etant donné que dans l'invention l'enregistrement de l'intensité des courants pouvant circuler dans le réseau est à prendre en considération, un second moyen de mesure 17 a été prévu. A ce titre on pourrait envisager d'utiliser un oscilloscope branché en parallèle aux bornes d'une résistance 19 placée en série entre la sortie positive 9a de l'horloge 9 et la pièce ou déversoir 5. Ainsi, en choisissant correctement la valeur de la résistance 19, pourrait-on effectuer sur l'appareil de mesure 17 une lecture directe du courant circulant dans le réseau.

Pour le traitement de ces mesures de tension et de courant, les appareils 15 et 17 ont été reliés à une unité 21 d'acquisition, de traitement et de visualisation dont une illustration plus détaillée est présentée sur la figure 2.

Sur cette figure, on retrouve tout d'abord la borne la de la canalisation, la borne de branchement du déversoir 5 ainsi que la borne de branchement de l'électrode 11. On a également représenté schématiquement le générateur de courant 7, l'horloge 9 et la résistance 19. On retrouve enfin les deux moyens 15 et 17 de mesure respectivement de la tension U entre la canalisation et l'électrode et, d'autre part, du courant I entre cette même canalisation et la pièce 5.

Lors des essais effectués, il est apparu que les tensions relevées entre l'ouvrage et la pièce anodique étaient parfois largement perturbées par des sources électriques générant, dans le milieu électrolytique 3, des fréquences perturbatrices. On a donc prévu la possibilité d'adjoindre en sortie de l'appareil de mesure 15 un filtre 23 du type filtre passe-bas éventuellement avec rejecteur permettant donc d'éliminer par filtrage les fréquences captées ayant des valeurs situées au-delà d'un seuil prédéterminé et/ou correspondant à des fréquences identifiées comme particulièrement perturbatrices. Lors des essais effectués, il avait par exemple été choisi d'éliminer les fréquences supérieures à 5 Hz.

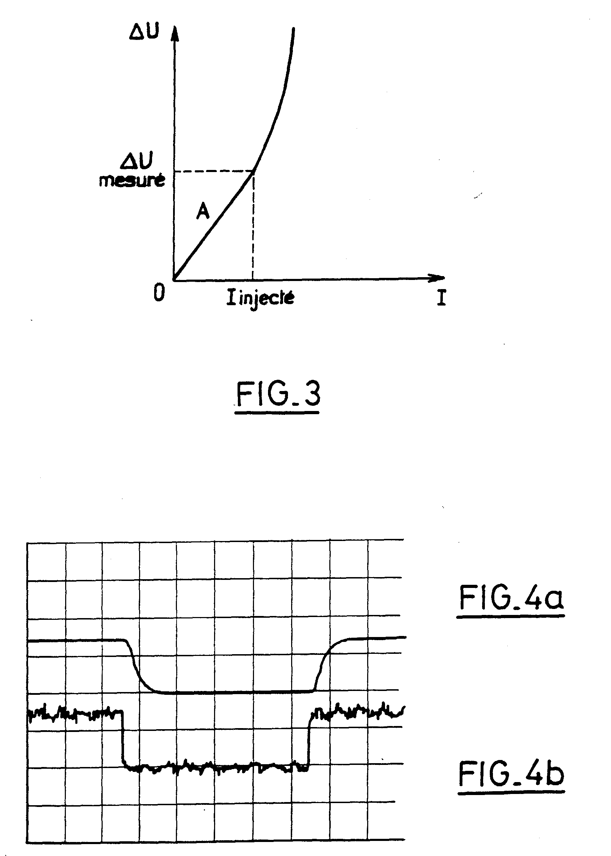

Par souci de clarté, on a illustré sur les figures 4a et 4b l'allure des signaux obtenus sans filtre (figure 4b) et avec filtre (figure 4a) à partir de l'appareil d'acquisition de tension 15.

Sur la figure 4a, on constate immédiatement l'effet bénéfique du filtre qui, sans déformer particulièrement les signaux, permet un lissage bénéfique à la qualité des mesures.

Comme on l'a certainement compris de ce qui précède, une part importante de l'invention réside en fait dans la façon dont sont traités les relevés captés et acquis par les deux moyens de mesure de tension et de courant 15 et 17.

Sur la figure 2 on a schématisé par le bloc 25 l'unité de traitement utilisée qui renferme essentiellement un micro-processeur 27, des mémoires programmables 29, des programmes de traitement 31 et un calculateur 32.

Bien entendu, une unité de visualisation 33 a été adjointe à l'unité de traitement. Cette unité de visualisation pourra prendre la forme par exemple d'une imprimante ou d'un écran d'ordinateur en liaison avec un clavier 35 lui-même relié à l'unité de traitement 25 pour la programmation et la commande, via l'unité de commande 24, des opérations que l'on va maintenant présenter.

Comme on l'a dit, le but de l'appareil qui vient d'être présenté est de permettre automatiquement la vérification de l'état d'isolation électrique d'un ouvrage conducteur.

Pour cela, on va donc chercher à établir rigoureusement la relation existant entre la tension U canalisation 1/électrode 11 et le courant I circulant dans le réseau électrique installé.

Le choix de la prise en considération d'une telle relation s'explique par le fait que, quel que soit l'ouvrage et son environnement, les caractéristiques obtenues ont la particularité d'être linéaires et du type ΔU = AI avec (A = constante), ceci depuis l'origine I = 0 jusqu'à une certaine valeur de courant (voir figure 3). Et c'est en fait la pente A (c'est-à-dire comme on l'a compris la résistance de l'ouvrage) qui va permettre à l'opérateur en possession de ces informations d'analyser l'état d'isolement électrique de l'ouvrage.

Pour mener à bien cette analyse, on va tout d'abord régler convenablement le rythme imposé par l'horloge 9, de façon à par exemple ce que le générateur 7 établisse dans le réseau pendant environ 0,5 à 1 seconde, un courant imposé I, ceci avec des temps de pose à courant imposé nul par exemple de l'ordre de 8 à 10 secondes.

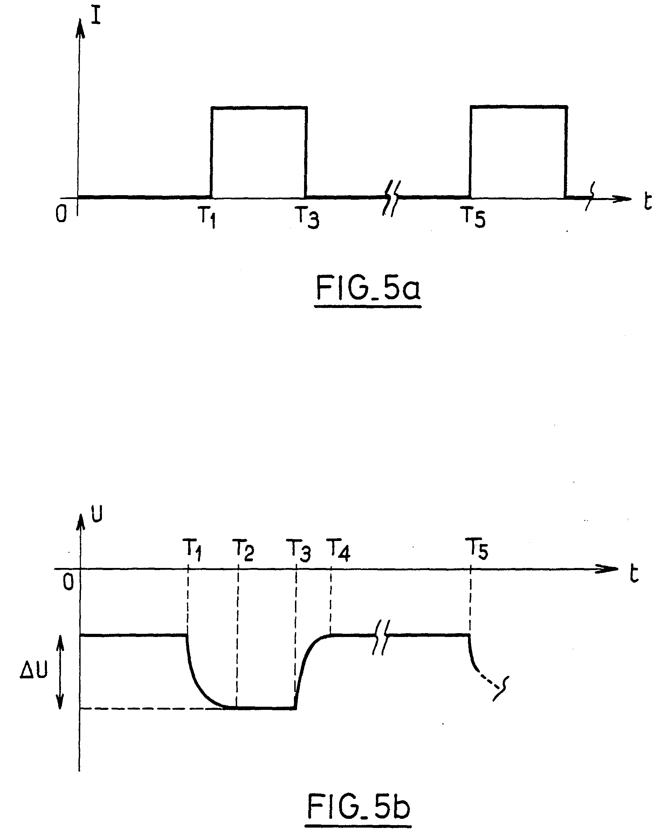

Sur les figures 5a et 5b, on a représenté respectivement deux exemples de signaux enregistrés en courant et en tension. On remarquera que la durée des injections de courant faites par le générateur 7 est représentée par l'intervalle T3 - T1, tandis que l'intervalle entre deux injections apparaît comme correspondant à T5 - T3.

Pour comprendre le fonctionnement du système, plaçons-nous tout d'abord à l'origine des temps. Jusqu'au temps T1, le générateur 7 ne va débiter aucun courant. Pendant cet intervalle, on va alors capter et enregistrer, de préférence plusieurs fois la tension entre l'ouvrage 1 et l'électrode 11. Au temps T1, un créneau de courant de valeur constante et d'intensité déterminée va être établi dans le réseau. Le capteur 17 va alors capter et enregistrer l'intensité de ce courant. Après le temps établissement du filtre 23 (T2 - T1) on va alors capter et enregistrer à nouveau, de préférence plusieurs fois, la tension entre l'ouvrage et l'électrode. Ceci jusqu'au temps T3 qui marque la fin du créneau d'injection de courant. L'unité de traitement 25 va alors calculer et enregistrer en mémoire la différence ΔU entre les tensions enregistrées précédemment, sans et avec circulation de courant imposé I.

Bien entendu, pendant ce temps, des nouvelles mesures de tension ouvrage/électrode ont été captées et enregistrées par l'oscilloscope 15, courant coupé, jusqu'à ce que l'horloge 9 commande au générateur 7 un nouveau créneau de courant et qu'une nouvelle mesure de tension et de courant soit prise en considération pour un nouveau calcul de la différence des potentiels ΔU.

Ainsi, au fur et à mesure de l'avancement des mesures, l'unité de traitement 25 va pouvoir fournir sur l'unité de visualisation 33 l'évolution, en fonction de l'intensité I du courant imposé, de la différence des potentiels ΔU canalisation/électrode avec et sans circulation de ce courant imposé.

Cette évolution étant, comme on l'a indiqué ci-dessus, linéaire et de la forme ΔU = A I (A = constante) depuis I = 0 jusqu'à une valeur d'intensité déterminée, le calculateur 32 va pouvoir calculer la pente A et ainsi fournir sur l'unité 33 la valeur de cette pente A identifiable à la résistance électrique de l'ouvrage.

Ayant présenté le principe général des mesures effectuées, on va maintenant décrire brièvement les différents perfectionnements qui peuvent être adjoints pour garantir la fiabilité des mesures.

Tout d'abord, dans les intervalles de temps courant établi et courant coupé (T3 - T2 et T5 - T4 sur la figure 5b), on préférera dans la pratique capter et enregistrer plusieurs valeurs de tension échelonnées dans le temps des gradients ouvrage/électrode régulièrement.

Ensuite, il est apparu préférable de compléter ces mesures échelonnées par deux tests effectués, avantageusement en combinaison, courant coupé et courant établi.

Pour cela, il a été prévu de comparer entre eux les relevés de tension effectués pendant l'intervalle T3 - T2 puis l'intervalle T5 - T4. Si ces valeurs sont comprises dans une gamme prédéterminée, et témoignent d'une stabilité du potentiel, on poursuit les étapes suivantes du procédé. Si par contre l'une au moins des dites valeurs n'est pas comprise dans cette gamme, on n'enregistre pas de valeur de tension et on renouvelle quelques instants plus tard un nouveau cycle de mesures et de génération de nouveaux crénaux de courant en réitérant l'étape de comparaison ci-dessus.

Ainsi, va t-on pouvoir éviter la prise en considération de relevés perturbés, pendant les états stables du système avec et sans courant imposé.

Mais des perturbations électriques peuvent également intervenir pendant les phases transitoires de chute ou de gain de tension (T2 - T1 ou T4 - T3 sur la figure 5b). Pour remédier à ce problème, on a prévu de répéter plusieurs fois les étapes de mesure et d'acquisition des tensions canalisation/électrode avec et sans courant imposé, ceci pour une même intensité de courant généré, de façon à entraîner ainsi le calcul de plusieurs gradients de potentiels ΔU calculés à partir de créneaux de courant constants. Et lors de ce calcul de ΔU, l'unité de traitement 25 effectuera alors un traitement statistique de ces valeurs de potentiels et n'enregistrera de valeurs que si ces dernières convergent vers une valeur moyenne.

On constatera que ces différentes précautions portent sur l'acquisition et le traitement des mesures de potentiel. En ce qui concerne la vérification des mesures de courant on a envisagé une boucle de contrôle schématisée par la ligne 37 sur la figure 2 et destinée à contrôler les valeurs d'intensité effectivement fournies par le générateur de courant 7.

Plus précisement, on a prévu d'enregistrer tout d'abord l'intensité des créneaux de courant commandés par l'opérateur et introduits dans les unités mémoires 29 de la machine. Après avoir capté par les moyens de mesure 17, l'intensité de courant fourni périodiquement par le générateur 7, l'unité de traitement 25 et plus particulièrement le calculateur 32 va comparer l'intensité enregistrée commandée et l'intensité captée. Si l'écart entre ces deux intensités est compris dans une gamme pré-déterminée on va alors enregistrer l'intensité captée. Sinon, un signal d'alarme pourra être prévu de manière à s'afficher sur l'unité de visualisation 33, permettant ainsi à l'opérateur d'agir.

## Revendications

1. Procédé pour vérifier l'état d'isolement électrique d'un ouvrage électriquement conducteur placé dans un milieu électrolytique et relié par un réseau de conducteurs électriques d'une part à une contre-électrode (5) placée dans ledit milieu électrolytique et, d'autre part, à une électrode de référence (11) en contact avec ce même milieu électrolytique, caractérisé en ce que :
a) on capte au moins une fois et on enregistre la tension entre l'ouvrage (1) et l'électrode de référence,
b) on établit dans ledit réseau, entre l'ouvrage et la contre-électrode (5), une circulation imposée de courant électrique dont on enregistre l'intensité,
c) on capte au moins une fois et on enregistre à nouveau la tension entre l'ouvrage et l'électrode (11), courant en circulation,
d) on calcule et on enregistre la différence ΔU entre les tensions enregistrées en a) et c), respectivement sans et avec circulation de courant imposé,
e) on interrompt ladite circulation de courant imposé et on répète un nombre donné de fois les étapes a), b), c) et d) en faisant varier, lors de l'étape b), l'intensité du courant imposé,
f) on en déduit ensuite l'évolution de ladite différence ΔU en fonction de l'intensité I du courant établi dans le réseau, laquelle évolution est linéaire de la forme ΔU = AI (A = constante) depuis I = 0 jusqu'à une valeur d'intensité déterminée de ce courant,
g) on calcule la pente A,
h) et on en déduit l'état d'isolement électrique de l'ouvrage (1) en identifiant ladite pente à la résistance électrique de cet ouvrage.

2. Procédé selon la revendication 1 caractérisé en ce que les tensions entre l'ouvrage (1) et la contre-électrode (5) étant perturbées par des sources électriques générant, dans ledit milieu électrolytique (3), des fréquences perturbatrices qui modifient dans le temps lesdites tensions, on élimine par filtrage lors des étapes a) et/ou c) ces dites fréquences perturbatrices lorsque celles-ci sont au-delà d'un seuil prédéterminé.

3. Procédé selon la revendication 1 ou la revendication 2 caractérisé en ce que :
- lors de l'étape a) on capte successivement plusieurs valeurs de tensions entre l'ouvrage et l'éléctrode de référence (11),
- on compare ces valeurs entre elles,
- si ces valeurs sont comprises dans une gamme prédéterminée, on les enregistre et on poursuit les étapes suivantes du procédé,
- si par contre l'une au moins des dites valeurs n'est pas comprise dans ladite gamme, on n'enregistre pas de valeur et l'on réitère les différentes étapes ci-dessus.

4. Procédé selon l'une quelconque des revendications 1 à 3 caractérisé en ce que :
- lors de l'étape c), on capte plusieurs valeurs de tension entre l'ouvrage et l'électrode de référence (11) que l'on échelonne dans le temps,
- on compare ces valeurs entre elles,
- si ces valeurs sont comprises dans une gamme prédéterminée, on les enregistre et on poursuit les étapes suivantes du procédé,
- si par contre l'une au moins des dites valeurs n'est pas comprises dans ladite gamme, on n'enregistre pas de valeurs et l'on n'effectue pas l'étape suivante d).

5. Procédé selon la revendication 1 ou la revendication 2 caractérisé en ce que lors des étapes a) et c), on capte succesivement et on enregistre plusieurs valeurs de tension entre l'ouvrage et l'électrode de référence (11).

6. Procédé selon la revendication 3 et la revendication 4 caractérisé en ce que lorsque lesdites valeurs de tensions entre l'ouvrage (1) et l'électrode de référence (11) captées lors des étapes a) et c) sans et avec circulation de courant imposé sont comprises dans lesdites gammes de valeurs prédéterminées, on calcule, lors de l'étape d), la (les) différence(s) de potentiels ΔU par la différence des moyennes arithmétiques desdites valeurs enregistrées sans et avec courant imposé.

7. Procédé selon l'une quelconque des revendications précédentes caractérisé en ce que :
- on répète plusieurs fois les étapes a), b), c) et d) en maintenant à chaque fois lors de l'étape b), la même intensité de courant imposé, de façon à obtenir lors de l'étape d) plusieurs différences de potentiels ΔU calculées à partir de cette même intensité de courant,
- et, lors de cette étape d), on effectue un traitement statistique desdites valeurs calculées des différences de potentiels ΔU et, si ces valeurs convergent vers une valeur moyenne, on enregistre cette valeur moyenne.

8. Procédé selon l'une quelconque des revendications précédentes caractérisé en ce que lors de l'étape b),
- pour établir dans le réseau le courant imposé, on utilise un générateur de courant (7) que l'on commande pour qu'il délivre ladite intensité déterminée,
- on enregistre cette intensité déterminée commandée,
- après avoir capté en un endroit dudit réseau l'intensité de courant qui circule,
- on compare l'intensité enregistrée commandée et l'intensité captée, et
- si l'écart entre ces deux intensités est compris dans une gamme prédéterminée, on enregistre l'intensité captée.

9. Appareil pour vérifier l'état d'isolement électrique d'un ouvrage (1) électriquement conducteur placé dans un milieu électrolytique (3) et relié par un réseau de conducteurs électriques d'une part à une contre-électrode (5) placée dans ledit milieu électrolytique et, d'autre part, à une électrode de référence (11) en contact avec ce même milieu, comprenant :
- des moyens de mesure de tension (15) branchés sur le réseau entre l'ouvrage (1) et l'électrode de référence (11),
- un générateur (7) de courant pour établir une circulation de courant imposé entre l'ouvrage (1) et la contre-électrode (5),
- des moyens de mesure de ce courant (17, 19),
caractérisé en ce qu'il comprend, en outre :
- une horloge (9) agissant sur le générateur (7) pour interrompre et rétablir séquentiellement la circulation dudit courant imposé, et déclencher des mesures dudit courant et de ladite tension, en l'absence puis avec circulation de ce courant imposé,
- des moyens de traitement (25, 32) des mesures effectuées, ces moyens de traitement comprenant des moyens de calcul (32) pour calculer, pour chaque intensité de courant imposé donné :
a) la différence ΔU entre lesdites tensions mesurées sans et avec circulation de courant imposé,
b) le rapport A entre la différence ΔU desdites tensions et l'intensité I correspondante mesurée du courant imposé, A étant par conséquent la pente de la courbe ΔU=A I,
- et des moyens d'affichage (33) du rapport A calculé.

10. Appareil selon la revendication 9 caractérisé en ce qu'il comporte, en outre, associé à ces dits moyens de mesure de tension, un filtre passe-bas (23) éliminant les fréquences perturbatrices des signaux de tension mesurés, supérieures à un seuil déterminé, et en ce que ledit générateur de courant génère un courant continu.

## Patentansprüche

1. Verfahren zum Überprüfen des elektrischen Isolierungszustandes eines elektrisch leitenden Erzeugnisses, das in einem elektrolytischen Milieu angeordnet ist und durch ein elektrisches Leiternetz einerseits mit einer Gegenelektrode (5), die in dem elektrolytischen Milieu angeordnet ist, und andererseits mit einer Bezugselektrode (11) in Kontakt mit diesem elektrolytischen Milieu verbunden ist, dadurch gekennzeichnet, daß:
a) man mindestens einmal die Spannung zwischen dem Erzeugnis (1) und der Bezugselektrode erfaßt und aufzeichnet,
b) man in dem Netz zwischen dem Erzeugnis und der Gegenelektrode (5) einen aufgebrachten elektrischen Stromfluß errichtet, dessen Intensität man aufzeichnet,
c) man mindestens einmal erneut die Spannung zwischen dem Erzeugnis und der Elektrode (11) erfaßt, während der Strom fließt,
d) man die Differenz ΔU zwischen den bei a) bzw. c) aufgezeichneten Spannungen mit und ohne aufgebrachtem Stromfluß berechnet und erfaßt,
e) man den aufgebrachten Stromfluß unterbricht und einige Male die Schritte a), b), c) und d) wiederholt, indem man während des Schrittes b) die aufgebrachte Stromintensitätvariieren läßt,
f) man anschließend die Entwicklung dieser Differenz ΔU in Funktion der Intensität I des in dem Netz errichteten Stromes ableitet, wobei diese Entwicklung linear von der Form ΔU = A I (A = Konstante) von I = 0 bis zu einem vorbestimmten Intensitätswert dieses Stromes ist,
g) man den Abfall A berechnet,
h) und man daraus den elektrischen Isolierungszustand des Erzeugnisses (1) ableitet, indem man diesen Abfall an dem elektrischen Widerstand dieses Erzeugnisses feststellt.

2. Verfahren nach Anspruch 1, dadurch gekennzeichnet, daß die Spannungen zwischen dem Erzeugnis (1) und der Gegenelektrode (5) durch elektrische Quellen gestört werden, welche in dem elektrolytischen Milieu (3) Störfrequenzen erzeugen, die über der Zeit diese Spannungen verändern, man durch Filtrieren während der Schritte a) und/oder c) diese Störfrequenzen eliminiert, wenn sich diese oberhalb einer vorbestimmten Schwelle befinden.

3. Verfahren nach Anspruch 1 oder Anspruch 2, dadurch gekennzeichnet, daß:
- man während des Schrittes a) nacheinander mehrere Spannungswerte zwischen dem Erzeugnis und der Bezugselektrode (11) erfaßt,
- man diese Werte miteinander vergleicht,
- man diese Werte, wenn sie sich in einem bestimmten Bereich befinden, aufzeichnet und die weiteren Schritte des Verfahrens verfolgt,
- wenn sich hingegen mindestens einer dieser Werte nicht in diesem Bereich befindet, kein Wert aufgezeichnet wird, und man die unterschiedlichen obigen Schritte wiederholt.

4. Verfahren nach einem der Ansprüche 1 bis 3, dadurch gekennzeichnet, daß:
- man während des Schrittes c) mehrere Spannungswerte zwischen dem Erzeugnis und der Bezugselektrode (11) erfaßt, die man über die Zeit staffelt,
- man diese Werte miteinander vergleicht,
- man diese Werte aufzeichnet, wenn sie sich in einem vorbestimmten Bereich befinden, und man die weiteren Schritte des Verfahrens verfolgt,
- wenn hingegen mindestens einer dieser Werte sich nicht in diesem Bereich befindet, keine Werte aufgezeichnet werden und man den weiteren Schritt d) nicht ausführt.

5. Verfahren nach Anspruch 1 oder Anspruch 2, dadurch gekennzeichnet, daß während der Schritte a) und c) nacheinander mehrere Spannungswerte zwischen dem Erzeugnis und der Bezugselektrode (11) erfaßt und aufgezeichnet werden.

6. Verfahren nach Anspruch 3 und Anspruch 4, dadurch gekennzeichnet, daß wenn sich die zwischen dem Erzeugnis (1) und der Bezugselektrode (11) während der Schritte a) und c) ohne und mit aufgebrachtem Stromfluß erfaßten Spannungswerte in den vorbestimmten Wertbereichen befinden, man während des Schrittes d) die Differenz(en) der Potentiale ΔU durch die Differenz der arithmetischen Mittel dieser ohne und mit aufgebrachtem Strom aufgezeichneten Werte berechnet.

7. Verfahren nach einem der vorhergehenden Ansprüche, dadurch gekennzeichnet, daß:
- man mehrere Male die Schritte a), b), c) und d) wiederholt, indem man jedesmal während des Schrittes b) dieselbe aufgebrachte Strom intensität aufrecht erhält, um während des Schrittes d) mehrere Potentialdifferenzen ΔU zu erhalten, welche ausgehend von dieserselben Stromintensität berechnet werden,
- und man während dieses Schrittes d) eine statistische Behandlung dieser berechneten Werte der Potentialdifferenzen ΔU durchführt und man, wenn diese Werte zu einem mittleren Wert hin konvergieren, diesen mittleren Wert aufzeichnet.

8. Verfahren nach einem der vorhergehenden Ansprüche, dadurch gekennzeichnet, daß während des Schrittes b)
- zum Errichten des aufgebrachten Stromes in dem Netz ein Stromgenerator (7) verwendet wird, der gesteuert wird, damit er die vorbestimmte Intensität liefert,
- diese vorbestimmte, gesteuerte Intensität aufgezeichnet wird,
- nachdem an einer Stelle dieses Netzes die Intensität des fließenden Stromes erfaßt wurde,
- die aufgezeichnete, gesteuerte Intensität und die erfaßte Intensität verglichen werden, und
- wenn der Abstand zwischen diesen zwei Intensitäten sich in einem vorbestimmten Bereich befindet, die erfaßte Intensität aufgezeichnet wird.

9. Vorrichtung zum Überprüfen des elektrischen Isolierungszustandes eines elektrisch leitenden Erzeugnisses (1), das in einem elektrolytischen Milieu (3) angeordnet und durch ein Netz von elektrischen Leitern einerseits mit einer Gegenelektrode (5) verbunden ist, welche in dem elektrolytischen Milieu angeordnet ist, und andererseits mit einer Bezugselektrode (11) verbunden ist, welche sich mit diesem selben Milieu in Kontakt befindet, wobei die Vorrichtung aufweist:
- Spannungsmeßmittel (15), die an dem Netz zwischen dem Erzeugnis (1) und der Bezugselektrode (11) angeschlossen sind,
- einen Stromgenerator (7), um einen Stromfluß zu errichten, der zwischen dem Erzeugnis (1) und der Gegenelektrode (5) aufgebracht ist,
- Meßmittel (17, 19) dieses Stromes, dadurch gekennzeichnet, daß die Vorrichtung ferner aufweist:
- eine Uhr (9), die auf dem Generator (7) arbeitet, um sequentiell den Fluß des aufgebrachten Stromes zu unterbrechen und wiederherzustellen, und um Messungen dieses Stromes und dieser Spannung in Abwesenheit und dann mit Fluß des aufgebrachten Stromes auszulösen,
- Behandlungsmittel (25, 32) für die durchgeführten Messungen, wobei diese Behandlungsmittel Rechenmittel (32) aufweisen, um für jede gegebene, aufgebrachte Stromintensität zu berechnen:
a) die Differenz ΔU zwischen den gemessenen Spannungen ohne und mit aufgebrachtem Stromfluß,
b) das Verhältnis A zwischen der Differenz ΔU der Spannungen und der entsprechenden gemessenen Intensität I des aufgebrachten Stromes, wobei A folglich der Abfall der Kurve ΔU = A I ist,
- und Anzeigemittel (33) des berechneten Verhältnisses A.

10. Vorrichtung nach Anspruch 9, dadurch gekennzeichnet, daß sie ferner einen Tiefpaßfilter (23) aufweist, der diesen Spannungsmeßmitteln zugeordnet ist und die Störfrequenzen der gemessenen Spannungssignale eliminiert, die sich oberhalb einer vorbestimmten Schwelle befinden, und daß der Stromgenerator einen Gleichstrom erzeugt.

## Claims

1. Process for determining the electrically insulating state of an electrically conductive construction placed in an electrolytic medium and connected by a network of electrical conductors, on the one hand to a counter electrode (5) placed in said electrolytic medium and, on the other hand, to a reference electrode (11) in contact with the said electrolytic medium, characterized in that:
a) the voltage between the construction (1) and the reference electrode is detected at least once and recorded,
b) a prescribed flow of electric current is established, in said network, between the construction and the counter electrode (5), and the intensity of said electric current is recorded,
c) the voltage between the construction and the electrode (11), with current flowing, is detected at least once and recorded again,
d) the difference ΔU between the voltages recorded at a) and c), respectively without and with the prescribed current flow, is calculated and recorded,
e) said flow of prescribed current is interrupted and steps a), b), c) and d) are repeated a given number of times while varying, during step b), the intensity of the prescribed current,
f) the evolution of said difference ΔU is then deduced therefrom, as a function of the intensity I of the current established in the network, which evolution is linear and in the form ΔU = AI (A = constant) from I = 0 to a specific value of intensity of this current,
g) the slope A is calculated,
h) and the electrically insulating state of the construction (1) is deduced therefrom by identifying said slope at the electrical resistance of the construction.

2. Process according to Claim 1, characterized in that since the voltages between the construction (1) and the counter electrode (5) are disturbed by electrical sources generating, in said electrolytic medium (3), interference frequencies which modify said voltages over time, the said interference frequencies are eliminated by filtering during steps a) and/or c) when they exceed a predetermined threshold.

3. Process according to Claim 1 or Claim 2, characterized in that:
- during step a), a plurality of values of voltages between the construction and the reference electrode (11) are detected in succession,
- these values are compared with one another,
- if these values lie within a predetermined range, they are recorded and the following steps of the process are carried out,
- if, on the contrary, at least one of said values does not lie within said range, no value is recorded and the different stops above are repeated.

4. Process according to any one of Claims 1 to 3, characterized in that:
- during step c), a plurality of voltage values between the construction and the reference electrode (11) are detected which are spaced over time,
- these values are compared with one another,
- if these values lie within a predetermined range, they are recorded and the following steps of the process are carried out,
- if, on the contrary, at least one of said values does not lie within said range, no values are recorded and the following step d) is not carried out.

5. Process according to Claim I or Claim 2, characterized in that during steps a) and c) a plurality of voltage values between the construction and the reference electrode (11) are detected in succession and recorded.

6. Process according to Claim 3 and Claim 4, characterized in that when said values of voltages between the construction (1) and the reference electrode (11) which are detected during steps a) and c) without and with the prescribed current flow lie within said predetermined ranges of values, during step d) the difference(s) of potential ΔU is/are calculated by the difference of the arithmetical averages of said values recorded without and with the prescribed current.

7. Process according to any one of the preceding claims, characterized in that:
- steps a), b), c) and d) are repeated several times while maintaining each time, during step b), the same intensity of prescribed current, so as to obtain during step d) a plurality of differences of potentials ΔU calculated from that same current intensity,
- and, during this step d), statistical processing of said calculated values of the differences of potentials ΔU is carried out and, if these values converge towards an average value, this average value is recorded.

8. Process according to any one of the preceding claims, characterized in that during step b),
- in order to establish the proscribed current in the network, a current generator (7) is used which is controlled so that it delivers said specific intensity,
- this controlled specific intensity is recorded,
- after detecting, at one location in said network, the intensity of current which is flowing,
- the controlled intensity recorded is compared with the intensity detected, and
- if the deviation between these two intensities lies within a predetermined range, the intensity detected is recorded.

9. Apparatus for determining the electrically insulating state of an electrically conductive construction (1) placed in an electrolytic medium (3) and connected by a network of electrical conductors, on the one hand to a counter electrode (5) placed in said electrolytic medium and, on the other hand, to a reference electrode (11) in contact with the said medium, comprising:
- voltage measuring means (15) connected to the network between the construction (1) and the reference electrode (11),
- a current generator (7) to establish a flow of prescribed current between the construction (1) and the counter electrode (5),
- means for measuring this current (17, 19),
characterized in that it additionally comprises:
- a clock (9) acting on the generator (7) to interrupt and restore, sequentially, the flow of said prescribed current, and to trigger the measurement of said current and of said voltage, in the absence of, and then with, the prescribed current flow,
- means (25, 32) for processing the measurements taken, the processing means comprising calculating means (32) for calculating, for each intensity of given prescribed current :
a) the difference ΔU between said voltages measured without and with the prescribed current flow,
b) the ratio A between the difference ΔU of said voltages and the corresponding measured intensity I of the prescribed current, A consequently being the slope of the curve ΔU=A I,
- and means (33) for displaying the calculated ratio A.

10. Apparatus according to Claim 9, characterized in that it additionally comprises, associated with said voltage measuring means, a low-pass filter (23) eliminating the frequencies which interfere with the voltage signals measured and exceed a specific threshold, and in that said current generator generates a direct current.
